# EUROPÄISCHE PATENTSCHRIFT

(11) **EP 3 306 008 B1**
(45) Veröffentlichungstag und Bekanntmachung des Hinweises auf die Patenterteilung: **22.05.2019**
(21) Anmeldenummer: 17193664.4
(22) Anmeldetag: 28.09.2017
(51) Int. Cl.: E04F 15/08, E04F 13/14, B32B 9/00, B32B 7/12

(54) **KERAMISCHE BODENVERBUNDPLATTE**
COMPOSITE CERAMIC FLOOR PANEL
PANNEAU COMPOSITE DE PLANCHER EN CÉRAMIQUE

(30) Priorität: 04.10.2016 DE 102016118754
(43) Veröffentlichungstag der Anmeldung: 11.04.2018
(73) Patentinhaber: Trockle, Herbert, 46244 Bottrop (DE); Theissen, Christoph, 46414 Rhede (DE)
(72) Erfinder: Trockle, Herbert, 46244 Bottrop (DE); Theissen, Christoph, 46414 Rhede (DE)
(74) Vertreter: Rausch Wanischeck-Bergmann Brinkmann

(56) Entgegenhaltungen:
- EP-A1- 2 952 650
- WO-A1-2006/099894
- WO-A1-2016/057467
- DE-A1-102012 025 028

## Beschreibung

Die Erfindung betrifft eine keramische Bodenverbundplatte für Vorbau- und/oder Anbaubalkone, mit einer Keramikfliese aus Feinsteinzeug, die eine aus dem Feinsteinzeug bestehen und eine Vorderseite sowie eine Rückseite bereitstellende Grundplatte und eine Glasur aufweist, wobei die Glasur auf der Vorderseite der Grundplatte angeordnet ist.

Vorbau- und/oder Anbaubalkone sind aus dem Stand der Technik an sich bekannt, weshalb es eines gesonderten druckschriftlichen Nachweises an dieser Stelle nicht bedarf.

Vorbau- und/oder Anbaubalkone werden typischerweise in Verbindung mit Bestandsobjekten verwendet, das heißt nachgerüstet. Gemäß einer weit verbreiteten Bauform verfügt ein Vorbau- und/oder Anbaubalkon über einen von Beinen getragenen Rahmen. Dieser Rahmen stellt Querträger zur Verfügung, die im endmontierten Zustand der Abstützung eines Bodenbelags beispielsweise aus Holz oder Beton dienen.

Insbesondere aus Kostengründen finden als Bodenbelag Betonplatten Verwendung. Diese sind typischerweise zweischichtig ausgebildet und verfügen über eine als Grundplatte dienende erste Schicht, auf der eine gegebenenfalls farblich abgemischte zweite Betonschicht aufgebracht ist. Vor einem Auftrag der zweiten Betonschicht auf die als Grundplatte dienende erste Betonschicht wird aus Gründen der Stabilität der späteren Betonplatte in an sich bekannter Weise ein Metallgitter auf die als Grundplatte dienende erste Betonschicht gelegt, bevor die zweite Betonschicht aufgebracht wird und aushärtet. Im Ergebnis steht eine mit einer Metallbewehrung ausgerüstete Betonplatte, die je nach Farbgebung der zweiten Betonschicht über eine visuell wahrnehmbare Vorder- bzw. Rückseite verfügt.

Aus dem Stand der Technik ist gemäß der DE 1 879 213 eine Wandplatte, Fliese oder dergleichen bekannt, deren Glasurfläche mit einer löslichen, zusammenhängenden Schicht aus Klebstoff, Kleister, Leim, Wasserglas oder dergleichen zum Schutz gegen Verkratzen bedeckt ist. In gleicher Weise können auch Mosaiksteine ausgerüstet sein, die auf ein Gitternetz aus Nylonfäden aufgeklebt sind.

Aus der DE 38 04 311 A1 ist eine großflächige Platte aus Keramik, Steinzeug, Naturstein und/oder Kunststein bekannt, die zur Erzielung einer hohen Bruchfestigkeit und eines ausreichenden Brandschutzes auf ihrer Rückseite mit einer Beschichtung aus einem feuerfesten und hitzeisolierenden Material ausgerüstet ist.

Die EP 1 130 183 A1 offenbart eine Fassadenplatte mit einer Oberflächenplatte aus Mamor, Stein, Metall, Stahl oder dergleichen, die mit einer Trägerschicht aus aufgeschäumten Kunststoff direkt verschäumt ist.

Aus der DE 87 14 303 U1 ist ferner eine Platte aus Hartschaum mit aufgeklebten Keramikkacheln bekannt, die insbesondere dazu geeignet ist, im Außenbereich verlegt zu werden, da sie verschiedensten Witterungseinflüssen standhält.

Aus dem Stand der Technik ist gemäß der EP 2 952 650 A1 des Weiteren ein plattenförmiges Konstruktionselement bekannt, das ein starres Plattenelement aus beispielsweise natürlichen oder künstlichen Steinmaterialien aufweist. Dieses Plattenelement ist mittels einer Polymermatrix verstärkt, die aus einem Harz in Kombination mit einem Katalysator gebildet ist. In diese Polymermatrix ist ein Geflecht eingebettet, das beispielsweise aus Glasfilamentfasern und einer Bindemittelmischung besteht.

Die DE 10 2012 025 028 A1 offenbart ein Keramik-Verbundelement, das eine glasierte obere Keramikplatte aufweist, die mittels Klebmörtel und eingebautem Drahtgewebe aus Metall oder Kunststoff mit einer als Trägerplatte dienenden unglasierten Keramikplatte verbunden ist. Ein solches Keramik-Verbundelement wird insbesondere im Bereich der Fassadenverkleidung von Bauwerken verwendet.

Obgleich sich Betonplatten der vorbeschriebenen Art als Bodenplatten für Vorbau- und/oder Anbaubalkone bewährt haben, besteht Verbesserungsbedarf, insbesondere mit Blick auf eine im Verwendungsfall vereinfachte benutzerseitige Pflege.

Es ist deshalb die **Aufgabe** der Erfindung, eine neuartige keramische Bodenverbundplatte vorzuschlagen, die anstelle vorbekannter Betonplatten für Vorbau- und/oder Anbaubalkone verwendbar ist und eine vereinfachte benutzerseitige Pflege ermöglicht.

Zur **Lösung** dieser Aufgabe wird mit der Erfindung vorgeschlagen eine keramische Bodenverbundplatte der gattungsgemäßen Art, die sich auszeichnet durch eine Absturzsicherung in Form eines Tragwerks, das in eine auf der Rückseite der Grundplatte angeordnete Verbindungsschicht eingebettet ist, wobei das Tragwerk ein Längs- und Querstäbe aufweisendes Gitter aus Edelstahl ist, das ein Flächenformat aufweist, das kleiner als das Flächenformat der Keramikfliese ist, so dass das Tragwerk randseitig der Keramikfliese nicht übersteht.

Die erfindungsgemäße Bodenverbundplatte - nachfolgend auch nur Verbundplatte genannt - verfügt über eine Keramikfliese und ein Tragwerk, welches Tragwerk als Absturzsicherung dient. Das Tragwerk ist auf der Rückseite der Keramikfliese angebracht, wobei zur Verbindung von Keramikfliese und Tragwerk eine Verbindungsschicht dient. In diese Verbindungsschicht ist das Tragwerk eingebettet. Es ist so ein quasi einstückiger Verbund aus einer Keramikfliese einerseits und einem Tragwerk andererseits geschaffen. Dabei meint "quasi einstückig" im Sinne der Erfindung, dass eine zerstörungsfreie Trennung von Keramikfliese und Tragwerk Dank der vorgesehenen Verbindungsschicht nicht möglich ist.

Die nach der Erfindung vorgesehene Keramikfliese besteht ihrerseits aus einer Grundplatte und einer Glasur. Die Grundplatte ist aus einem Feinsteinzeug gebildet und trägt vorderseitig die Glasur. Rückseitig der Grundplatte ist das schon vorbeschriebene Tragwerk angeordnet, womit sich ein insgesamt sandwichartiger Aufbau ergibt, denn trägt die Grundplatte auf ihrer Vorderseite die Glasur und auf ihrer der Vorderseite gegenüberliegenden Rückseite das Tragwerk, das in die rückseitig der Grundplatte aufgebrachte Verbindungsschicht eingebettet ist.

Die erfindungsgemäße Verbundplatte erweist sich gegenüber vorbekannten Betonplatten aus mehreren Gründen als vorteilhaft. Allen voran ist die erfindungsgemäße Verbundplatte aufgrund ihrer vorderseitig ausgebildeten Glasur benutzerseitig im Bedarfsfall einfacher zu reinigen und damit von Verschmutzungen freizuhalten. Anders als vergleichsweise offenporiger Beton saugt die erfindungsgemäße Verbundplatte auch keine Feuchtigkeiten und/oder Öle bzw. Fette auf, so dass sie weniger verschmutzungsanfällig als vorbekannte Betonplatten ist. Dieser Vorteil kommt insbesondere bei als Bodenplatten für Vorbau- und/oder Anbaubalkone genutzten Verbundplatten zum Tragen, da gerade auf Balkonen Essen zubereitet und/oder verspeist wird, so dass es bei auf den Balkonboden heruntergefallenen Speise- und/oder Essenresten unweigerlich auch zu Verschmutzungen kommt. Die erfindungsgemäße Verbundplatte ist gegenüber solchen Verschmutzungen unempfindlich und gestattet darüber hinaus in einfacher Weise eine unter Umständen erforderlich werdende Reinigung, was bei Betonplatten aufgrund ihrer Offenporigkeit nicht möglich ist.

Im Unterschied zur vorbekannten Betonplatte baut die erfindungsgemäße Verbundplatte weniger auf, was im Vergleich zu einer erheblichen Gewichtsreduzierung beiträgt. Die Konstruktion des Vorbau- und/oder Anbaubalkons ist damit entlastet, was es gestattet, in Höhenrichtung höher aufzubauen und damit auch mehrgeschossige Bestandsobjekte nachträglich mit entsprechenden Vorbau- und/oder Anbaubalkonen auszurüsten.

Die Tragfähigkeit der in der Verbundplatte befindlichen Keramikfliese ist für den Anwendungsfall als Bodenplatte für einen Vorbau- und/oder Anbaubalkon mehr als ausreichend. Insofern dient das erfindungsgemäß mit der Keramikfliese kombinierte Tragwerk nicht als Bewehrung für die Keramikfliese zwecks Abstützung derselben. Das in die Verbundplatte integrierte Tragwerk dient vielmehr als Absturzsicherung, und zwar für den Fall, dass die Keramikfliese einer Verbundplatte infolge insbesondere einer unsachgemäßen Behandlung beschädigt oder gar zerstört wird. In einem solchen Fall sorgt das Tragwerk trotz zerstörter Keramikfliese dafür, dass zwischen den benachbarten Querbalken eines Vorbau- und/oder Anbaubalkons Schutz vor einem Hindurchfallen gegeben ist.

Im verbauten Zustand stützt sich eine erfindungsgemäße Verbundplatte an zwei beabstandet zueinander angeordneten Querträgern eines Vorbau- und/oder Anbaubalkons ab. Sollte es nun zu einer Zerstörung der Keramikfliese der Verbundplatte kommen, verbleibt zwischen den Querträgern des Vorbau- und/oder Anbaubalkons das Tragwerk der Verbundplatte, so dass der zwischen den benachbarten Querbalken befindliche Spalt durch das Tragwerk geschlossen ist, so dass mittels des Tragwerks ein Durchfallschutz, mithin eine Absturzsicherung gegeben ist. Sinn und Zweck des Tragwerks ist es mithin im Unterschied zu vorbekannten Betonplatten nicht, eine Bewehrung bereitzustellen, sondern vielmehr als Absturzsicherung für den Fall einer Zerstörung der Keramikfliese zu dienen.

Mit der erfindungsgemäßen Verbundplatte wird erstmals eine auch als Bodenplatte für Vorbau- und/oder Anbaubalkone geeignete Platte vorgeschlagen, die einerseits wenig verschmutzungsanfällig ist und andererseits ein als Absturzsicherung dienendes Tragwerk als integralen Bestandteil aufweist, so dass auch im Zerstörungsfall der Keramikfliese Durchfallschutz gegeben ist. Darüber hinaus ist die erfindungsgemäße Verbundplatte benutzerseitig in einfacher Weise zu reinigen und damit sauber zu halten.

Es ist gemäß einem weiteren Merkmal der Erfindung vorgesehen, dass das Tragwerk ein Längs- und Querstäbe aufweisendes Gitter ist. Es ist so im Zerstörungsfall der Keramikfliese ein sicherer Durchfallschutz gegeben. Dabei beträgt die Maschenweite des Gitters zwischen 15 mm x 15 mm bis 25 mm x 25 mm, vorzugsweise zwischen 17 mm x 17 mm bis 23 mm x 23 mm, noch mehr bevorzugt 19,5 mm x 19,5 mm.

Das Gitter kann aus Kunststoff oder Metall bestehen, wobei Metall insbesondere schon aus Brandschutzgründen bevorzugt ist. Als Metall kommt vorzugsweise Edelstahl in Betracht, zwecks verbessertem Korrosionsschutz.

Gemäß einem weiteren Merkmal der Erfindung ist vorgesehen, dass das Tragwerk ein Flächenformat aufweist, das kleiner als das Flächenformat der Keramikfliese ist. Es wird so sichergestellt, dass das Tragwerk randseitig nicht über die Grundplatte der Keramikfliese übersteht, so dass im Verlegefall quasi fugenfrei Keramikfliesen aneinandergelegt werden können.

Gemäß einem weiteren Merkmal der Erfindung ist vorgesehen, dass die Verbindungsschicht einen Klebstoff beinhaltet. Dieser bewirkt eine quasi einstückige Ausgestaltung der Verbundplatte, das heißt ein quasi einstückiges Verbinden von Keramikfliese und rückseitig daran angeordnetem Tragwerk.

Bei dem Klebstoff handelt es sich bevorzugterweise um ein reaktiv abbindendes Zwei-Komponenten-Klebsystem. Dieses beinhaltet bevorzugterweise ein Abdichtmittel, so dass das Klebsystem im ausgehärteten Zustand wasserdicht, frost-, sulphat-, UV- und alterungsbeständig ist. Aufgrund insbesondere seiner Frostbeständigkeit stellt das erfindungsgemäß eingesetzte Klebsystem sicher, dass es infolge von Temperaturschwankungen nicht zu einem durch Scherkräfte bedingten Abreißen der Verbindungsschicht vom Grundkörper der Keramikfliese kommt. Damit ist ein temperaturunabhängiger, inniger Verbund zwischen Keramikfliese und Tragwerk sichergestellt.

Weitere Merkmale und Vorteile der Erfindung ergeben sich aus der nachfolgenden Beschreibung anhand der Figuren. Dabei zeigen
- Fig. 1: in schematisch perspektivischer Darstellung eine erfindungsgemäße Verbundplatte;
- Fig. 2: in einer schematischen Schnittdarstellung ausschnittsweise die Verbundplatte nach Fig. 1 und
- Fig. 3: in schematischer Perspektivansicht ein mit erfindungsgemäßen Verbundplatten ausgerüsteter Vorbau- und/oder Anbaubalkon.

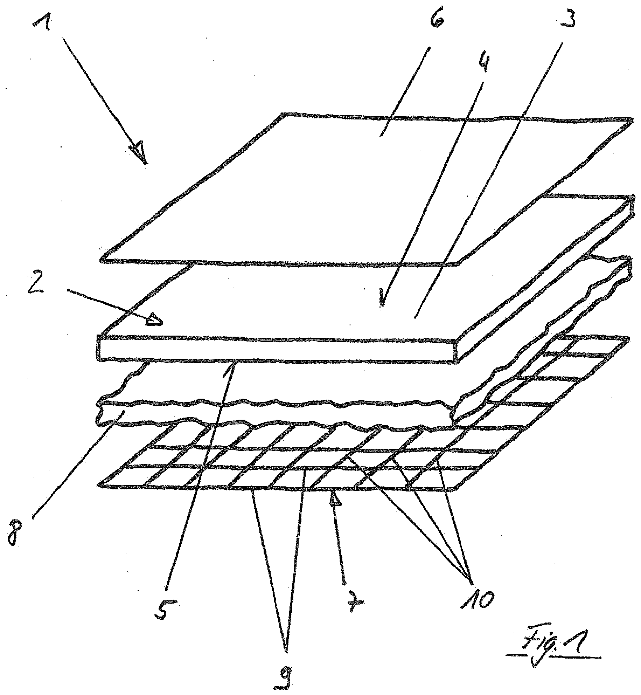

Fig. 1 lässt in schematischer Explosionsdarstellung eine erfindungsgemäße Verbundplatte 1 erkennen.

Die Verbundplatte 1 ist sandwichartig aufgebaut und verfügt über eine Keramikfliese 2 und ein Tragwerk 7.

Die Keramikfliese 2 verfügt ihrerseits über eine Grundplatte 3 aus Feinsteinzeug. Die Grundplatte 3 stellt eine Vorderseite 4 sowie eine Rückseite 5 bereit. Auf der Vorderseite der Grundplatte 3 ist eine Glasur 6 ausgebildet. Zusammen bilden die Grundplatte 3 und die vorderseitig daran angeordnete Glasur 6 die Keramikfliese 2 aus.

Rückseitig der Keramikfliese 2, das heißt auf der Rückseite 5 der Grundplatte 3 ist das Tragwerk 7 angeordnet. Zu diesem Zweck ist eine auf der Rückseite der Grundplatte 3 ausgebildete Verbindungsschicht 8 vorgesehen, in die das Tragwerk 7 eingebettet ist. Dabei dient das Tragwerk 7 nicht als Bewehrung für die Keramikfliese 2, sondern im bestimmungsgemäßen Verwendungsfall insbesondere als Bodenplatte als Absturzsicherung für den Fall, dass die Keramikfliese 2 infolge insbesondere einer unsachgemäßen Handhabung beschädigt oder zerstört ist.

Im gezeigten Ausführungsbeispiel nach Fig. 1 ist das Tragwerk 7 als ein Längsstäbe 9 und Querstäbe 10 aufweisendes Gitter aus Edelstahl gebildet. Die Verbindungsschicht 8 beinhaltet einen Klebstoff, der ein reaktiv abbindendes Zwei-Komponenten-Klebsystem ist, das ein Abdichtmittel beinhaltet.

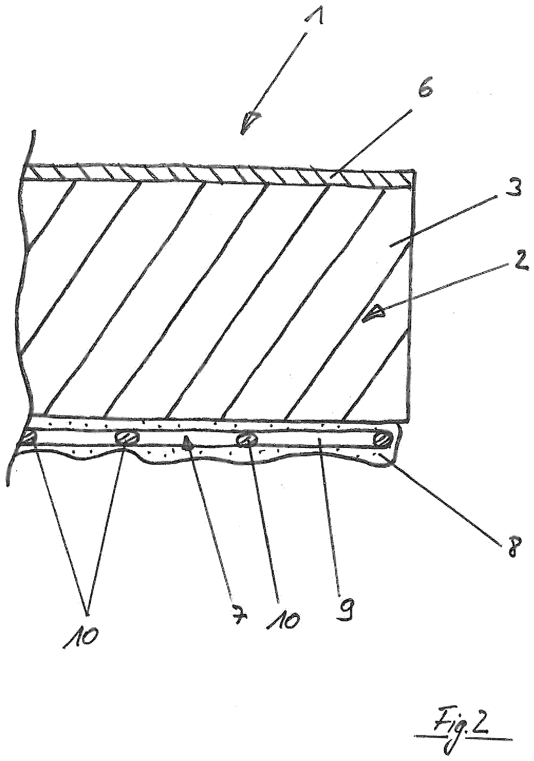

Wie sich insbesondere aus der Schnittdarstellung nach Fig. 2 ergibt, ist das Flächenformat des Tragwerks 7 kleiner als das Flächenformat der Keramikfliese 2, so dass das Tragwerk 7 randseitig der Keramikfliese 2 nicht übersteht.

Zur Herstellung einer erfindungsgemäßen Verbundplatte wird zunächst die Keramikfliese ausgebildet. Alsdann wird auf die Rückseite 5 der Grundplatte 3 der Keramikfliese 2 das Klebsystem als Verbindungsschicht 8 ausgebracht. Alsdann wird das Tragwerk 7 in die Verbindungsschicht 8 eingedrückt, bis dieses vollständig in die Verbindungsschicht 8 eingetaucht und damit in diese eingebettet ist. Das Eindrücken des Tragwerks 7 kann mittels eines einfachen Presswerkzeuges maschinell, aber auch per Hand erfolgen.

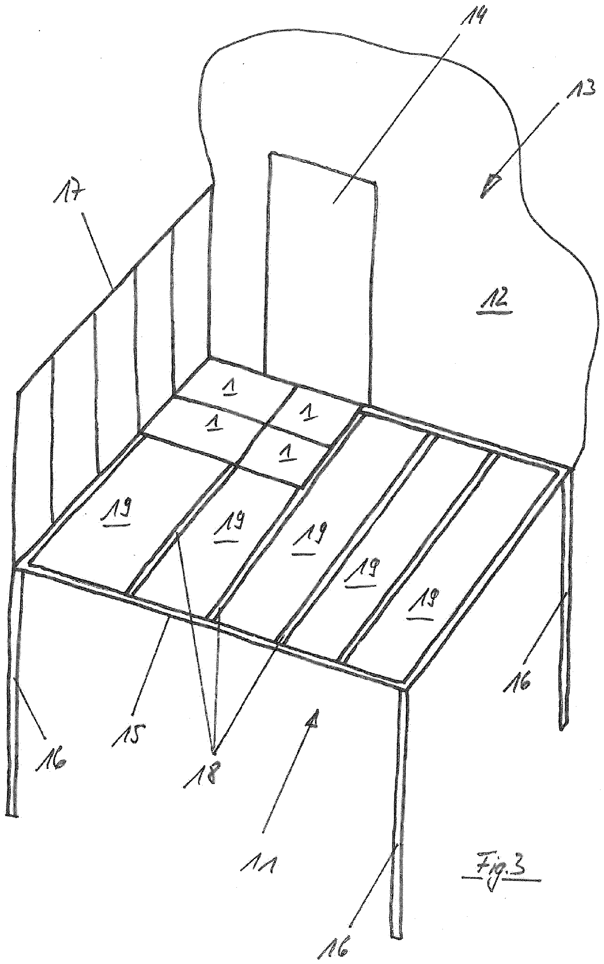

Fig. 3 zeigt in rein schematischer Perspektivdarstellung ein Anwendungsbeispiel anhand eines Vorbau- und/oder Anbaubalkons 11. Dieser ist im dargestellten Ausführungsbeispiel an einer Hauswand 12 eines nicht näher dargestellten Hauses 13 montiert. Im endmontierten Zustand ist der Vorbau- und/oder Anbaubalkon 11 benutzerseitig durch eine hauseigene Tür 14 zugänglich.

Der Vorbau- und/oder Anbaubalkon 11 verfügt in typischer Weise über einen von Beinen 16 getragenen Rahmen 15, der randseitig ein umlaufendes Geländer trägt. Der besseren Übersicht wegen ist mit Bezug auf die Zeichnungsebene nach Fig. 3 in Fig. 3 nur das linksseitige Geländer 17 eingezeichnet.

Der Rahmen 15 des Vorbau- und/oder Anbaubalkons 11 verfügt über Querträger 18. Diese Querträger 18 stützen im endmontierten Zustand als Bodenplatten auf dem Rahmen 15 aufgelegte Verbundplatten 1 ab. Dies lässt die Darstellung nach Fig. 3 gut erkennen.

Die Tragfähigkeit der von den Verbundplatten 1 bereitgestellten Keramikfliesen 2 ist für eine Verwendung der Verbundplatten 1 als Bodenplatten für Vorbau- und/oder Anbaubalkone ausreichend. Es kann nichtsdestotrotz insbesondere bei einer unsachgemäßen Handhabung einer Verbundplatte 1 dazu kommen, dass eine Keramikfliese 2 beschädigt oder gar zerstört wird. Um gleichwohl sicherzustellen, dass hinsichtlich der zwischen zwei benachbarten Querträgern 18 befindlichen Spalte 19 ein Durchfallschutz gegeben ist, verfügt eine jede Verbundplatte 1 in schon vorbeschriebener Weise über ein Tragwerk 7. Dieses im beschriebenen Ausführungsbeispiel als Gitter ausgebildete Tragwerk 7 stellt im Falle einer Zerstörung einer Keramikfliese 2 einer Verbundplatte 1 sicher, dass nach wie vor eine Spaltüberbrückung zwischen zwei benachbarten Querträgern 18 gegeben ist, womit eine Verbundplatte 1 in vorteilhafter Weise eine Absturzsicherung bereitstellt

### Bezugszeichen

- 1: Verbundplatte
- 2: Keramikfliese
- 3: Grundkörper
- 4: Vorderseite
- 5: Rückseite
- 6: Glasur
- 7: Tragwerk
- 8: Verbindungsschicht
- 9: Längsstab
- 10: Querstab
- 11: Vorbau- und/oder Anbaubalkon
- 12: Hauswand
- 13: Haus
- 14: Tür
- 15: Rahmen
- 16: Bein
- 17: Geländer
- 18: Querträger
- 19: Spalte

## Patentansprüche

1. Keramische Bodenverbundplatte für Vorbau- und/oder Anbaubalkone, mit einer Keramikfliese (2) aus Feinsteinzeug, die eine aus dem Feinsteinzeug bestehende und eine Vorderseite (4) sowie eine Rückseite (5) bereitstellende Grundplatte (3) und eine Glasur (6) aufweist, wobei die Glasur (6) auf der Vorderseite (4) der Grundplatte (3) angeordnet ist, und mit einer Absturzsicherung in Form eines Tragwerks (7), das in eine auf der Rückseite (5) der Grundplatte (3) angeordnete Verbindungsschicht (8) eingebettet ist, **dadurch gekennzeichnet, dass** das Tragwerk (7) ein Längs- und Querstäbe (9, 10) aufweisendes Gitter aus Edelstahl ist, das ein Flächenformat aufweist, das kleiner als das Flächenformat der Keramikfliese (2) ist, so dass das Tragwerk (7) randseitig der Keramikfliese (2) nicht übersteht.

2. Bodenverbundplatte nach Anspruch 1, **dadurch gekennzeichnet, dass** die Maschenweite des Gitters zwischen 15 mm x 15 mm bis 25 mm x 25 mm, vorzugsweise zwischen 17 mm x 17 mm bis 23 mm x 23 mm, noch mehr bevorzugt 19,5 mm x 19,5 mm beträgt.

3. Bodenverbundplatte nach Anspruch 1 oder 2, **dadurch gekennzeichnet, dass** die Verbundschicht (8) einen Klebstoff beinhaltet.

4. Bodenverbundplatte nach Anspruch 3, **dadurch gekennzeichnet, dass** der Klebstoff ein reaktiv abbindendes Zwei-Komponenten-Klebsystem ist.

5. Bodenverbundplatte nach Anspruch 4, **dadurch gekennzeichnet, dass** das Klebsystem ein Abdichtmittel beinhaltet.

6. Vorbau- und/oder Anbaubalkon, **gekennzeichnet durch** eine Bodenverbundplatte nach einem der vorhergehenden Ansprüche.

## Claims

1. A ceramic composite floor panel for porch-like and/or extension-like balconies, comprising a ceramic tile (2) made of fine stoneware, which comprises a base plate (3) made of the fine stoneware and providing a front side (4) as well as a rear side (5) and a glazing (6), wherein the glazing (6) is arranged on the front side (4) of the base plate, and comprising a fall protection in form of a support structure (7) which is embedded in a compound layer (8) placed on the rear side (5) of the base plate (3), **characterized in that** the support structure (7) is a grid made of stainless steel, which comprises longitudinal and cross bars (9, 10) and which comprises a surface dimension which is smaller than the surface dimension of the ceramic tile (2), such that the support structure (7) does not project over the edges of the ceramic tile (2).

2. A composite floor panel according to claim 1, **characterized in that** the mesh size of the grid is comprised between 15 mm x 15 mm and 25 mm x 25 mm, preferably between 17 mm x 17 mm and 23 mm x 23 mm, more preferably between 19,5 mm x 19,5 mm.

3. A composite floor panel according to claim 1 or 2, **characterized in that** the compound layer (8) includes an adhesive.

4. A composite floor panel according to claim 3, **characterized in that** the adhesive is a reactively setting two-component-adhesive system.

5. A composite floor panel according to claim 4, **characterized in that** the adhesive system contains a sealing compound.

6. A porch-like and/or extension-like balcony, **characterized by** a composite floor panel according to one of the preceding claims.

## Revendications

1. Panneau composite de plancher en céramique pour des balcons en forme d'un porche et/ou d'un annexe, comprenant un carreau en céramique (2) fabriqué en grès cérame, qui comprend une plaque de base (3) consistant en ce grès cérame et présentant une face avant (4) ainsi qu'une face arrière (5) et un glaçage (6), dans lequel le glaçage (6) est disposé sur la face avant (4) de la plaque de base (3), et comprenant une prévention des chutes en forme d'une structure support (7), qui est incorporée dans une couche de liaison (8) disposée sur la face arrière (5) de la plaque de base (3), **caractérisé en ce que** la structure support (7) est une grille en acier inoxydable comprenant des barres longitudinales et transversales (9, 10), laquelle grille comprend une dimension de surface, qui est plus petite que la dimension de surface du carreau en céramique (2), de sorte que la structure support (7) ne fait pas saillie au-delà des bords du carreau en céramique (2).

2. Panneau composite de plancher selon la revendication 1, **caractérisé en ce que** la dimension des mailles de la grille est comprise entre 15 mm x 15 mm et 25 mm x 25 mm, de préférence entre 17 mm x 17 mm et 23 mm x 23 mm, de préférence particulière entre 19,5 mm x 19,5 mm.

3. Panneau composite de plancher selon la revendication 1 ou la revendication 2, **caractérisé en ce que** la couche de liaison (8) contient un adhésif.

4. Panneau composite de plancher selon la revendication 3, **caractérisé en ce que** l'adhésif est un système adhésif à deux composants à prise rapide de manière réactive.

5. Panneau composite de plancher selon la revendication 4, **caractérisé en ce que** le système adhésif contient un agent d'étanchéité.

6. Balcon en forme d'un porche et/ou d'un annexe, **caractérisé par** un panneau composite de plancher selon l'une des revendications précédentes.
